# EUROPÄISCHE PATENTSCHRIFT

(11) **EP 2 166 197 B1**
(45) Veröffentlichungstag und Bekanntmachung des Hinweises auf die Patenterteilung: **14.03.2012**
(21) Anmeldenummer: 09405142.2
(22) Anmeldetag: 20.08.2009
(51) Int. Cl.: F01L 1/02, F16H 7/06, F16H 7/18

(54) **Kettenantrieb für Nockenwelle**
Chain drive for camshafts
Entraînement d'arbres à cames à chaîne

(30) Priorität: 22.09.2008 CH 14972008
(43) Veröffentlichungstag der Anmeldung: 24.03.2010
(73) Patentinhaber: Kunststoff Schwanden AG, 8762 Schwanden (CH)
(72) Erfinder: Küsperth, Josef, 8762 Schwanden (CH)
(74) Vertreter: Quehl, Horst Max

(56) Entgegenhaltungen:
- EP-A1- 0 279 934
- EP-A2- 1 541 812
- EP-A2- 1 715 217
- DE-A1- 10 341 966
- GB-A- 2 143 926
- JP-A- 2001 182 790

## Beschreibung

Die Erfindung betrifft einen Kettenantrieb entsprechend den Merkmalen des Oberbegriffs des Patentanspruchs 1.

Ein Kettenantrieb dieser Art ist bekannt durch die JP 2001 182790. Dieser hat ebenfalls einen einarmigen Gleitschienenträger auf dem eine Gleitschiene befestigt ist und der mit einer innerhalb eines von der Kette umschlossenen Raumes angeordnete Kettenspanneinrichtung verbunden ist. Diese Verbindung erfolgt in Abstand vom äusseren Trägerende über einen Bügel, der sich von zwei Verbindungszapfen aus nach innen erstreckt. Eine solche Anordnung ist aufwendig bei der Herstellung und hat eine verhältnismässig geringe seitliche Stabilität, um einen ruhigen Kettenlauf zu gewährleisten

Durch die DE 33 26 319 (GB 2143926) ist weiterhin ein Kettenantrieb bekannt, bei dem eine mit einem Gleitbelag versehene Schiene den längeren Arm eines doppelarmigen Stellhebels bildet. Seine Kettenspanneinrichtung wirkt in Richtung parallel zu einem angrenzenden Kettentrum an einem kurzen Hebelarm, der im Bereich der Stellhebellagerung mittels Stiften am längeren Arm befestigt ist. Auch eine solche Anordnung hat die Nachteile des zuvor genannten Kettenantriebs.

Der Erfindung liegt die Aufgabe zugrunde, einen kostengünstig herstellbaren Kettenantrieb der genannten Art zu finden, dessen Gleitschiene eine zuverlässige und verbesserte Führungseigenschaft aufweist und somit zu einem besonders ruhigen Kettenlauf beiträgt.

Die Lösung dieser Aufgabe erfolgt erfindungsgemäss aufgrund der kennzeichnenden Merkmale des Patentanspruchs 1.

Im Folgenden wird die Erfindung mit ihren Vorteilen an Hand eines zeichnerisch dargestellten Ausführungsbeispieles näher erläutert. Es zeigt:
Fig.1 eine Seitenansicht auf einen Bereich einer Verbrennungskraftmaschine, in dem ein erfindungsgemässer Kettenantrieb vorgesehen ist, nach Entfernung eines Gehäusedeckels dieses Kettenantriebs und mit einer Ansicht eines Gleitschienenträgers bei einer weggelassenen Seitenwange,
Fig. 2 und 3 perspektivische Darstellungen eines erfindungsgemässen Gleitschienenträgers mit eingesetzter Gleitschiene, in verschiedenen Blickrichtungen,
Fig.4 eine Seitenansicht des Gleitschienenträgers mit Gleitschiene nach Fig.2 und 3,
Fig.5 bis 8 Querschnittsdarstellungen entlang den Linien A-A, B-B, C-C und D-D der Fig.4.

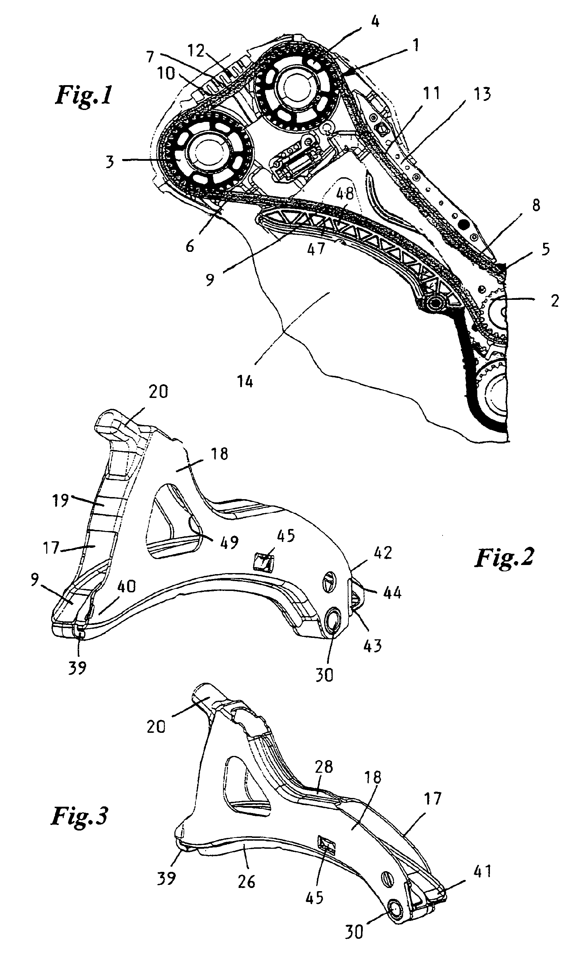

Entsprechend der Darstellung nach Fig.1 hat der Kettenantrieb 1 eine mit den Zähnen von drei Kettenrädern 2 bis 4 in Eingriff stehende Kette 5. Für einen ruhigen und damit Verschleiss mindernden Lauf der Kette 5 sind ihre drei Kettentrums 6 bis 8 jeweils entlang einer Gleitschiene 9 bis 11 geführt und gespannt. Dabei sind zwei dieser Gleitschienen 10,11 in fester Position über jeweils einen zugehörigen Gleitschienenträger 12,13 am Gehäuse 14 einer Verbrennungskraftmaschine montiert und bestimmen durch ihre gekrümmte Form den nach innen gekrümmten Verlauf von zwei der Kettentrums 7,8. Die längere solcher Gleitschienen 11 besteht aus einem Metall-Kunststoffverbund, indem ein aus Blech ausgestanzter Gleitschienenträger 13 durch Umspritzen in einer Spritzgiessmaschine in einem die Gleitschiene 11 bildenden Kunststoffkörper eingebettet ist. Ein nähere Beschreibung dieser Ausbildung befindet sich in der parallelen Patentanmeldung DE 10 2008 022 803.6.

Die dritte, an dem langen Kettentrum 6 anliegende Gleitschiene 9 ist an einem besonderen, die Erfindung mitbegründenden, schwenkbar gelagerten Gleitschienenträger 15 befestigt, der mit einer z.B. hydraulisch wirkenden Kettenspanneinrichtung 16 zusammenwirkt., so dass eine gleich bleibende Kettenspannung gewährleistet ist.

Aufgrund der Erfindung ist sowohl diese Kettenspanneinrichtung 16 als auch ein Teil dieses Gleitschienenträgers 15 innerhalb des von der Kette 5 umschlossenen Raumes angeordnet, indem die Kette 5 sich durch den Gleitschienenträger 15 hindurch erstreckt. Somit ergibt sich, dass die zum Spannen der Kette erforderlich Kraft anstatt von aussen innerhalb des von der Kette 5 umschlossenen Raumes aufgebracht wird und dennoch über die Gleitschiene 9 auf die Aussenseite der Kette 5 einwirkt.

Der Gleitschienenträger 15 ist mittels Blechumformungstechnik, d.h. durch Biegeverformung und Tiefziehen aus einem ausgestanzten Stahlblech hergestellt und hat zwei zueinander parallel verlaufende, angenähert schalenförmige Seitenwangen 17,18. Diese sind über eine nach Umbiegen des Stahlbleches entstandene Stirnwand 19 einstückig zu einem Hohlkörper miteinander verbunden.

Angrenzend an die Stirnwand 19 des Gleitschienenträgers 15 ist aus dem Stahlblech durch Tiefziehen ein nasenförmig nach vorn, d.h. in Kettenlaufrichtung abstehender Kontaktzapfen 20 herausgeformt, über den der Kontakt mit der Stirnfläche eines kolbenartig beweglichen Stellschaftes 21 der Kettenspanneinrichtung 16 erfolgt. Diese Art der einstückigen Ausformung gewährleistet eine hohe Festigkeit in dem hoch belasteten, die Spannkraft auf die Seitenwangen 17,18 weiterleitenden Bereich des Kontaktzapfens 20.

Die zur angenähert schalenförmigen Ausbildung der Seitenwangen 17,18 umgebogenen Wangenränder 22 bis 25 sind ausserdem parallel zueinander abgebogen und bilden somit aneinander liegende Randflansche 26 bis 29, die zur weiteren Formsteifigkeit der Seitenwangen 17,18 und damit des Gleitschienenträgers 15 beitragen, insbesondere wenn sie vorzugsweise miteinander verschweisst sind.

Eine weitere Verbindung beider Seitenwangen 17,18 miteinander erfolgt über eine für die schwenkbare Befestigung des Gleitschienenträgers 15 am Maschinengehäuse 14 vorgesehene Lagerhülse 30. Diese ist zwischen die Seitenwangen 17,18 eingesetzt und hat hierfür beidseitig einen nach aussen abgesetzten Durchmesser zur Ausbildung jeweils einer umlaufenden Hülsenschulter 31, 32, an der der Lochrand 33,34 von kreisförmigen Ausstanzungen der Seitenwangen 17,18 anliegt. Die durch die Hülsenschultern 31,32 gebildeten inneren Hülsenränder 35,36 sind ausserdem mit den Lochrändern 33,34 verschweisst.

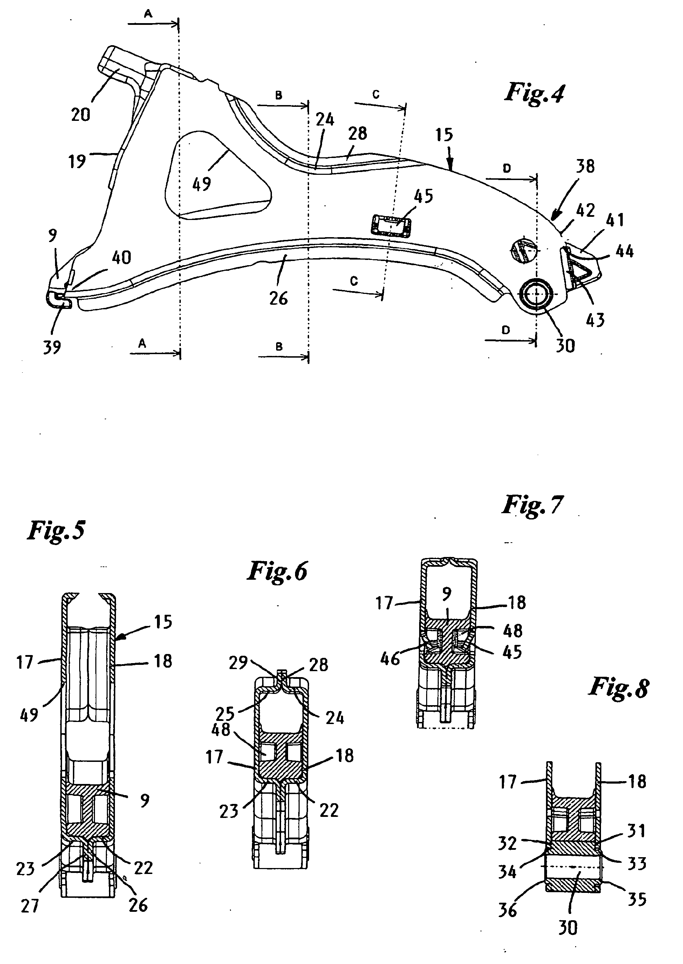

Die in Spritzgiesstechnik aus einem Kunststoff mit guten Gleiteigenschaften für die Kette 5 ausgebildete Gleitschiene 9 hat für die form- und kraftschlüssige Verbindung mit dem Gleitschienenträger 15 eine möglichst formstabile bzw. verwindungssteife, profilierte Querschnittsform, z.B. mit doppel -T- förmigem Querschnitt, wie die Darstellungen der Fig.5 bis 8 zeigen und weiterhin mit durch schräg verlaufende Seitenstege 47 gebildeten, dreieckfömigen seitliche Aussparungen 48, wie in der Darstellung der Fig.1 sichtbar ist.

Für die Herstellung eines festen Verbundes aus Gleitschienenträger 15 und Gleitschiene 9 wird diese in Gleitkontakt mit den Innenflächen der Seitenwangen 17,18, vom Zulaufende 38 des Gleitschienenträgers 15 aus, in diesen eingeschoben, bis sie mit einem vorderen, hakenförmig ausgebildeten Schienenende 39 dessen Vorderkante 40 übergreift und somit dort eingehakt werden kann. Anschliessend wird das hintere Schienenende 41 zurückgezogen und mit Gleitbewegung über jeweils eine äussere Krümmung 42 der Seitenwangen 17,18 des Gleitschienenträgers 15 niedergedrückt, so dass seitliche Raststege 43 derselben dort hinter einer hakenförmigen Hinterschneidung 44 einrasten. Nach solchem Einrasten liegt die Gleitschiene 9 mit ihrer gesamten Unterseite an den Wangenrändern 22,23 des Gleitschienenträgers 15 fest an und ist ausserdem seitlich zwischen dessen Seitenwangen 17,18 fixiert.

Für eine zusätzliche Fixierung einer solchen Einbettung der Gleitschiene 9 im Gleitschienenträger 15 sind in den Seitenwangen 17,18 des Gleitschienenträgers 15 u-förmige Ausstanzungen vorgesehen, so dass durch sie jeweils eine Fixierungslasche 45,46 umgrenzt ist. Nachdem die Gleitschiene 9 auf die zuvor beschriebene Weise in dem Gleitschienenträger 15 verrastet worden ist, werden diese Fixierungslaschen 45,46 nach innen gegen die Gleitschiene 9 gebogen, so dass sie entsprechend der Darstellung in Fig.7 in deren seitliche Aussparungen 48 zum Eingriff gelangen.

Zur Verringerung des Gewichts des Gleitschienträgers 15 können in verschiedenen, geringeren Verformungskräften ausgesetzten Bereichen der Seitenwangen 17,18 Ausstanzungen 49 vorgesehen sein. Ausserdem kann hierzu eine konkave Krümmung des Randes 24 des Gleitschienenträgers 15 beitragen, der entlang der der Gleitschiene 9 gegenüberliegenden Längsseite desselben verläuft.

## Patentansprüche

1. Kettenantrieb mit einer über mindestens zwei Kettenräder (2-4) geführten Kette (5) und mit mindestens einer nachstellbaren Gleitschiene (9), die an einem zwischen zwei Kettenrädern (2,3) verlaufenden Trum (6) der Kette (5) aussen anliegt, wobei die Gleitschiene (9) mit einem einarmigen Gleitschienenträger (15) verbunden ist, der im Bereich seines einen Endes schwenkbar gelagert ist und im Bereich seines anderen Endes mit einer innerhalb eines von der Kette (5) umschlossenen Raumes angeordneten Kettenspanneinrichtung (16) in Wirkverbindung steht, **dadurch gekennzeichnet, dass** der Gleitschienenträger (15) einstückig aus einem ausgestanzten Blechteil geformt ist und zwei den Kettentrum (6) zwischen sich einschliessende Seitenwangen (17,18) aufweist, welche sich von der aussen an der Kette anliegenden Gleitschiene (9) aus in den von der Kette (5) umschlossenen Raum hinein zu der Kettenspanneinrichtung (16) hin erstrecken.

2. Kettenantrieb nach Anspruch 1, **dadurch gekennzeichnet, dass** die Seitenwangen (17,18) des Gleitschienenträgers (15) über eine Stirnwand (19) desselben zu einem Hohlkörper miteinander verbunden sind.

3. Kettenantrieb nach Anspruch 1, **dadurch gekennzeichnet, dass** der Gleitschienenträger (15) einstückig angeformte Mittel (20) für seine Wirkverbindung mit der Kettenspanneinrichtung (16) aufweist.

4. Kettenantrieb nach einem der Ansprüche 1 bis 3, **dadurch gekennzeichnet, dass** die Seitenwangen (17,18) schalenförmig ausgebildet sind, indem sie nach innen gebogenen Wangenränder (22-25) aufweisen, wobei die Gleitschiene (9) an zwei der nach innen gebogenen Wangenränder (22,23) anliegt.

5. Kettenantrieb nach einem der Ansprüche 1 bis 4, **dadurch gekennzeichnet, dass** an den Seitenwangen (17,18) jeweils mindestens eine, durch eine u-förmige Ausstanzung gebildete Fixierungslasche (45,46) vorgesehen ist, die nach innen gebogen in Profilaussparungen (47,48) der Gleitschiene (9) seitlich eingreifen.

6. Kettenantrieb nach einem der Ansprüche 1 bis 5, **dadurch gekennzeichnet, dass** die Gleitschiene (9) über an ihren beiden Enden vorgesehene Rastmittel (39, 43,44) mit dem Gleitschienenträger (15) verrastet und verspannt ist.

7. Kettenantrieb nach Anspruch 6, **dadurch gekennzeichnet, dass** der Gleitschienenträger (15) angrenzend an die Rastmittel (43,44) eine äussere Krümmung (42) aufweist, so dass diese für die Einrastbewegung der Rastmittel (44) eine Gleitbahn bildet.

8. Kettenantrieb nach Anspruch 2,, **dadurch gekennzeichnet, dass** der Gleitschienenträger (15) an einem Ende einen einstückig durch Tiefziehen angeformten Kontaktzapfen (20) für die Wirkverbindung mit der Kettenspanneinrichtung (16) aufweist und im Bereich eines anderen Endes die Lagerhülse (30) eines Schwenklagers aufweist.

9. Kettenantrieb nach Anspruch 3, **dadurch gekennzeichnet, dass** der Gleitschienenträger (15) entlang seiner beiden längs gerichteten Wangenränder (22-25) eine konkave Krümmung aufweist.

10. Kettenantrieb nach Anspruch 3, **dadurch gekennzeichnet, dass** der Gleitschienenträger (15) in einem breiteren Bereich seiner Seitenwangen (17,18) eine Ausstanzung (49) aufweist.

11. Kettenantrieb nach Anspruch 4, **dadurch gekennzeichnet, dass** der Gleitschienenträger (15) in einem breiteren Bereich seiner Seitenwangen (17,18) eine Ausstanzung (49) aufweist.

## Claims

1. Chain drive comprising a chain (5) guided over at least two chain wheels (2-4) and comprising at least one adjustable sliding rail (9) which externally abuts a branch (6) of the chain (5) extending between two chain wheels (2,3), the sliding rail (9) being connected to a sliding rail support (15) which is mounted pivotably in the region of one of the ends thereof and which cooperates in the region of the other end thereof with a chain tensioning device (16) arranged within a chamber surrounded by the chain (5), **characterised in that** the siding rail support (15) is formed in one piece from a punched out sheet metal part and comprises two side flanks (17, 18) which enclose the chain branch (6) therebetween and extend from the externally abutting sliding rail (9) into the chamber surrounded by the chain (5) and towards the chain tensioning device (16).

2. Chain drive according to claim 1, **characterised in that** the side flanks (17, 18) of the sliding rail support (15) are interconnected via an end wall (19) thereof to form a hollow body.

3. Chain drive according to claim 1, **characterised in that** the sliding rail support (15) comprises integrally formed means (20) for its cooperation with the chain tensioning device (16).

4. Chain drive according to any one of claims 1 to 3, **characterised in that** the side flanks (17, 18) are shell-shaped since they have inwardly curved flank edges (22-25), the sliding rail (9) abutting two of the inwardly curved flank edges (22,23).

5. Chain drive according to any one of claims 1 to 4, **characterised in that** at least one fixing bracket (45,46) formed by a U-shaped punching out is provided on each of the side flanks (17,18) and engages laterally in profiled recesses (47,48) in the sliding rail (9) in an inwardly curved manner.

6. Chain drive according to any one of claims 1 to 5, **characterised in that** the sliding rail (9) is locked and tensioned with the sliding rail support (15) via locking means (39, 43, 44) provided at either end of said sliding rail.

7. Chain drive according to claim 6, **characterised in that** the sliding rail support (15) has an outer curvature (42) adjacent to the locking means (43,44) so that it forms a sliding track for the latching movement of the locking means (44).

8. Chain drive according to claim 2, **characterised in that** the sliding rail support (15) comprises a contact pin (20) formed integrally by deep drawing at one end for cooperation with the chain tensioning device (16) and comprises a pivot bearing in the region of another end of the bearing sleeve (30).

9. Chain drive according to claim 3, **characterised in that** the sliding rail support (15) has a concave curvature along its flank edges (22-25), which are both oriented in the longitudinal direction.

10. Chain drive according to claim 3, **characterised in that** the sliding rail support (15) has a punching out (49) in a broader region of its side flanks (17,18).

11. Chain drive according to claim 4, **characterised in that** the sliding rail support (15) has a punching out (49) in a broader region of its side flanks (17,18).

## Revendications

1. Entraînement à chaînes comprenant une chaîne (5) qui est guidée sur au moins deux roues à chaînes (2 - 4) et comprenant au moins un rail de glissement réglable (9) qui vient s'appliquer à l'extérieur sur un brin (6) de la chaîne (5), lequel s'étend entre les deux roues à chaînes (2, 3), dans lequel le rail de glissement (9) est relié à un support de rail de glissement (15) qui est monté avec faculté de pivotement dans la zone de l'une de ses extrémités et qui se trouve dans la zone de son autre extrémité en liaison efficace avec un dispositif de tension de la chaîne (16) qui est agencé dans un compartiment fermé par la chaîne (5), **caractérisé en ce que** le support de rail de glissement (15) est formé en un seul tenant à partir d'une partie en tôle découpée par estampage et **en ce qu'**il présente deux parois latérales (17, 18) qui incluent entre elles deux des brins de chaîne (6) qui s'étendent depuis le rail de glissement placé à l'extérieur (9) depuis le compartiment entouré par la chaîne (5) vers le dispositif de tension de la chaîne (16).

2. Entraînement à chaînes selon la revendication 1, **caractérisé en ce que** les parois latérales (17, 18) du support de rail de glissement (15) sont reliées entre elles par l'intermédiaire d'une paroi frontale (19) de celui-ci à un corps creux.

3. Entraînement à chaînes selon la revendication 1, **caractérisé en ce que** le support de rail de glissement (15) présente des moyens (20) formés en un seul tenant pour sa liaison efficace avec le dispositif de tension de la chaîne (16).

4. Entraînement à chaînes selon l'une des revendications 1 à 3, **caractérisé en ce que** les parois latérales (17, 18) sont réalisées en forme de coquille et **en ce qu'**elles présentent des bords de paroi cintrés vers l'intérieur (23, 25) et dans lequel le rail de glissement (9) vient s'appliquer sur deux des bords de paroi cintrés vers l'intérieur (22, 23).

5. Entraînement à chaînes selon l'une des revendications 1 à 4, **caractérisé en ce que**, sur les parois latérales (17, 18), on a prévu respectivement au moins une languette de fixation (45, 46) formée par une découpe par estampage en forme de « U » qui vient s'engager dans les évidements profilés cintrés vers l'intérieur (47, 48) du rail de glissement (9).

6. Entraînement à chaînes selon l'une des revendications 1 à 5, **caractérisé en ce que** le rail de glissement (9) vient s'enclencher par des moyens d'enclenchement (39, 43, 44) prévus sur ses deux extrémités avec le support de rail de glissement (15) et est tendu.

7. Entraînement à chaînes selon la revendication 6, **caractérisé en ce que** le support de rail de glissement (15) qui vient se limiter aux moyens d'enclenchement (43, 44) présente une courbure extérieure (42) de telle sorte que celle-ci forme une trajectoire de glissement pour le mouvement d'enclenchement des moyens d'enclenchement (44).

8. Entraînement à chaînes selon la revendication 2, **caractérisé en ce que** le support de rail de glissement (15) présente dans une extrémité un tenon de contact (20) qui est conformé en un seul tenant par emboutissage en profondeur pour la liaison efficace avec le dispositif de tension de la chaîne (16) et **en ce qu'**il présente dans la zone de son autre extrémité la douille de palier (30) d'un palier pivotant.

9. Entraînement à chaînes selon la revendication 3, **caractérisé en ce que** le support de rail de glissement (15) présente le long de ses deux bords de paroi orientés en sens longitudinal (22 - 25) une courbure concave.

10. Entraînement à chaînes selon la revendication 3, **caractérisé en ce que** le support de rail de glissement (15) présente une découpe par estampage (49) dans une zone plus large de ses parois latérales (17, 18).

11. Entraînement à chaînes selon la revendication 4, **caractérisé en ce que** le support de rail de glissement (15) présente une découpe par estampage (49) dans une zone plus large de ses parois latérales (17, 18).
